# EUROPÄISCHE PATENTANMELDUNG

(11) **EP 4 285 720 A1**
(43) Veröffentlichungstag der Anmeldung: **06.12.2023**
(21) Anmeldenummer: 23177130.4
(22) Anmeldetag: 03.06.2023
(51) Int. Cl.: A01M 1/20, A01M 17/00, A01M 19/00

(54) **VERFAHREN ZUR THERMISCHEN RAUMENTWESUNG SOWIE GERÄT UND SYSTEM ZU DESSEN DURCHFÜHRUNG UND VERFAHREN ZUM BETRIEB DES SYSTEMS**

(30) Priorität: 03.06.2022 DE 102022114204
(71) Anmelder: TROTEC GmbH, 52525 Heinsberg (DE)
(72) Erfinder: WEINGARTZ, Jochem, 52531 Übach-Palenberg (DE)
(74) Vertreter: Schober, Mirko

(57) **Zusammenfassung**

Die vorliegende Erfindung betrifft ein Verfahren zur thermischen Entwesung eines Raums (R) und/oder mindestens eines in einem Raum (R) befindlichen Gegenstands (O) sowie ein Gerät (G1, G2) und ein dieses enthaltenes System (S) zur Durchführung des Verfahrens. Hierzu wird im Raum (R) vorhandene Raumluft (L) zumindest bereichsweise für die Dauer einer Behandlungszeit (Bt) von ihrer jeweiligen Ist Temperatur (Ti) auf eine Soll Temperatur (Ts) erhitzt. Erfindungsgemäß wird der Raumluft (L) vor und/oder während ihrer Erhitzung wenigstens bereichsweise ein Anteil ihrer jeweiligen Feuchtigkeit aktiv entzogen. Letztlich ist die Erfindung auch auf ein Verfahren zum Betrieb des Systems (S) gerichtet.

## Beschreibung

Die vorliegende Erfindung betrifft ein Verfahren zur thermischen Entwesung eines Raums und/oder mindestens eines in einem Raum befindlichen Gegenstands gemäß den Merkmalen im Oberbegriff von Anspruch 1. Weiterhin betrifft die Erfindung ein Gerät, insbesondere in mobiler Ausgestaltung, mit den Merkmalen von Anspruch 13 zur Durchführung dieses Verfahrens. Auch betrifft die Erfindung ein System zur Durchführung dieses Verfahrens nach den Merkmalen von Anspruch 14, jeweils. Letztlich betrifft die Erfindung auch ein Verfahren zum Betrieb dieses Systems mit den Merkmalen von Anspruch 16.

In von Menschen genutzten Gebäuden gelten Insekten in vielerlei Hinsicht als unerwünscht. Neben darin enthaltenen Lebensmitteln befallen diese mitunter auch Materialien wie etwa Kleidungsstoff, was entsprechende Schäden nach sich zieht. Vor allem Parasiten nähern sich dem Menschen dabei gezielt an, da ihnen dessen organisches Material und Blut als Nahrungsquelle dient. Über Haut- und allergische Reaktionen hinaus ist so auch eine Übertragung von Krankheiten nicht auszuschließen. Mit dem "Einzug" dieser auch als Schädlinge oder Ungeziefer bezeichneten Kleinsttiere begann deren gezielte Bekämpfung, welche primär den Einsatz von Insektiziden beinhaltet. Da deren Wirksamkeit wegen zunehmender Resistenzen abnimmt und die Verwendung derartiger Mittel wegen möglicher Auswirkungen auf Mensch und Haustier umstritten ist, hat sich zwischenzeitlich die thermische Objekt- und Raumbehandlung durch Erhitzen etabliert. Das unabhängig von der jeweiligen Methode verfolgte Ziel der Befreiung beziehungsweise Beseitigung von Ungeziefer wird allgemein auch als Entwesung bezeichnet.

Hierzu offenbart beispielsweise die europäische Patentschrift EP 0 416 255 B1 ein Verfahren zum Entwesen von Gebäuden für die Lagerung und/oder Verarbeitung von organischen Produkten. Das Verfahren sieht zunächst das Abdichten des Gebäudeinnenraumes gegenüber der Außenatmosphäre vor, woraufhin eine Erhöhung der Innenraumtemperatur auf 35°C - 50°C erfolgt, bis die Innenwände des Gebäudes eine Temperatur von mindestens 27°C angenommen haben. Anschließend wird Kohlendioxid mit einer Temperatur von 30°C - 40°C in den Innenraum einge-bracht, bis dessen Anteil in der Raumluft mindestens 60% entspricht. Die so im Innenraum vorhandene Kohlendioxid-luftatmosphäre wird unter Beibehaltung dieser Temperatur-spanne für wenige Stunden bis wenige Tage aufrechterhalten.

Die europäische Offenlegungsschrift EP 0 676 138 A1 ist auf ein Verfahren zur Abtötung von Schädlingen in einem davon befallenen Objekt gerichtet. Hierzu wird das Objekt zunächst in einen Behandlungsraum überführt und dort über eine vorgegebene Zeitspanne hinweg auf eine Verfahrenstemperatur erwärmt. Besagte Behandlung findet zumindest teilweise in einer Inertgasatmosphäre statt, die beispielsweise auf der Zufuhr von Stickstoff, CO2 oder einem anderen Gasgemisch basieren kann. Durch eine Abstimmung von Verfahrenstemperatur und Verfahrensdauer unter Berücksichtigung der Empfindlichkeit des zu behandelnden Objekts soll so eine sichere und vollständige Abtötung der Schädlinge erzielt werden.

Das deutsche Gebrauchsmuster DE 296 18 646 U1 zeigt eine Vorrichtung zur Entwesung mittels Warmluft. Hierzu umfasst die Vorrichtung ein Gehäuse mit einem Gebläse sowie einer Heizeinrichtung, die sich zwischen einem im unteren Bereich des Gehäuses gelegenen Lufteinlass und einem im oberen Bereich des Gehäuses angeordneten horizontalen Luftauslass befinden. Die Größe der Einlässe ist dabei an die Durch-trittsfläche des Gebläses angepasst. Das Gehäuse ist auf seiner Unterseite zudem mit einer feuerfesten Bodenwanne ausgestattet. Die über den Lufteinlass ansaugbare Luft wird durch eine Luftführung hindurch in vertikaler Richtung durch das Gehäuse geführt, wobei sie im oberen Bereich um 90° umgelenkt wird, bevor sie aus dem Luftauslass austritt.

Mit der internationalen Offenlegungsschrift WO 2012/ 083 433 A1 wurde eine Einhausung zur Bekämpfung von in einem Objekt lebenden Arthropoden bekannt. Die Einhausung umfasst ein offenes Gehäuse, das über einen Deckel verschließbar ist. Dabei ermöglicht eine mit einer Steuerung verbundene Heiz-quelle das Erhitzen des Inneren der geschlossenen Einhausung und insofern des darin anordenbaren Objekts.

Der US-Patentschrift US 8,388,222 B2 ist eine Vorrichtung zu entnehmen, welche der Überwachung eines erhitzten Raumes dient, um darin enthaltene Schädlinge thermisch zu beseitigen. Die Vorrichtung umfasst einen Sensor und einen mit dem Sensor verbundenen Mikroprozessor sowie eine visuelle Anzeige. Der Sensor erfasst und meldet die in seiner Nähe vorhandene Temperatur an den Mikroprozessor. Der Mikroprozessor selbst ist dazu vorgesehen, das Erreichen einer durch den Sensor an ihn gemeldeten Behandlungstemperatur zu registrieren und nach Ablauf einer vorbestimmten Behandlungsdauer das Ende des Behandlungsvorgangs über die visuelle Anzeige anzuzeigen. Der Aufbau der Vorrichtung ist so gewählt, dass diese überaus klein und mit Batterien betrieben werden kann. Der eingebaute Sensor kann auch durch einen externen Sensor ersetzt oder ergänzt werden. Weiterhin wird auch der mögliche Einsatz eines Speichers beschrieben, in dem über eine Buchse Daten von einem externen Gerät ablegbar sind, um so bspw. den Mikroprozessor bei Bedarf programmieren zu können. Eine weitere mögliche Ausführungsform sieht eine drahtlose Datenübertragung mittels eines Senders vor, so dass die von der Vorrichtung gesammelten Daten, wie etwa die Temperatur und/oder Zeitdauer, an ein externes Modem über-tragbar sind. Hierdurch ist auch eine Fernüberwachung über das Internet möglich.

Die britische Patentschrift GB 2 195 875 B beschreibt ein Verfahren zur Bekämpfung von in einem Gebäude befindlichen Insekten mittels Hitze. Hierzu wird das Gebäude in eine Isolierung gehüllt, woraufhin die im Inneren des Gebäudes befindliche Luft durch ein Heizgerät erhitzt wird. Das Heizgerät kann hierzu innerhalb oder außerhalb des Gebäudes angeordnet sein, wobei es im letzten Fall über Schläuche mit dem Inneren des Gebäudes fluidleitend verbunden ist. Lüfter sorgen dabei für die notwendige Zirkulation der erhitzten Luft innerhalb des Gebäudes.

Mit der US-Offenlegungsschrift US 2005/0 246 942 A1 ist ein weiteres Verfahren zur Schädlingsbekämpfung in einem Teil eines Gebäudes (sog. "Anwendungszone") bekannt geworden. Hierzu werden mindestens ein mit der Anwendungszone in Verbindung stehendes Heizgerät und wenigstens ein Lüfter in der Anwendungszone aufgestellt, um die so erhitzbare Luft innerhalb der Anwendungszone umwälzen zu können. Dabei wird an mehreren Stellen der Anwendungszone die dort erreichte Temperatur gemessen, um das Erreichen der erforderlichen Behandlungstemperatur zu erfassen und den Prozesses zu beenden. Ferner ist vorgesehen, den messbaren Temperaturanstieg an den hierzu überwachten Stellen auf 15° F (~ 9,4°C) pro Stunde zu begrenzen. Die Richtung des in Orten mit einer hohen gemessenen Temperatur vorhandenen Luftstroms kann gezielt in Orte mit einer demgegenüber niedrigeren gemessenen Temperatur umgeleitet werden.

Aus der US-Patentschrift US 7,926,222 B2 geht ein zur US-Offenlegungsschrift US 2005/0 246 942 A1 ähnliches Verfahren hervor, welches konkret vorsieht, die Vielzahl der im Raum verteilten Temperatursensoren mit einem Erfassungsgerät datenübertragend zu verbinden, um den thermischen Prozesse zentral überwachen und steuern zu können.

Durch das Erhitzen befallener Objekte oder Räume bis hin zu ganzen Gebäuden werden darin enthaltene Schädlinge in der Regel abgetötet. Ursächlich hierfür ist vor allem das Ge-rinnen der Eiweißverbindungen ihrer Körperzellen, welche hierdurch so verändert werden, dass sie ihre biologische Funktion nicht mehr erfüllen können. Da Insekten nur über sehr begrenzte Möglichkeiten zur Regulierung ihrer Körper-temperatur verfügen und mangels der Eigenschaft zu Schwitzen keine Fähigkeit zur aktiven Abkühlung besitzen, können sie diesem Prozess nur wenig bis gar nichts entgegensetzen. Je nach Örtlichkeit und Schädlingsart muss die thermische Behandlung allerdings über einen mitunter sehr langen Zeit-raum hinweg erfolgen, um das gewünschte Ergebnis zu erhalten. Angesichts dieser Beobachtung bieten die derzeitigen Ver-fahren zur thermischen Entwesung daher durchaus noch Raum für Verbesserungen.

Vor diesem Hintergrund liegt der vorliegenden Erfindung die Aufgabe zugrunde, die bisher bekannten Verfahren zur thermischen Entwesung dahingehend weiterzuentwickeln, dass deren gemeinsames Ziel schneller und insgesamt effektiver erreicht werden kann. Weiterhin liegt der Erfindung die Aufgabe zugrunde, ein Gerät sowie ein dieses Gerät umfassendes System aufzuzeigen, mit denen sich das erfindungsgemäße Verfahren durchführen lässt. Letztlich soll auch ein Verfahren zum Betrieb des erfindungsgemäßen Systems vorgestellt werden.

Die Lösung des ersten verfahrenstechnischen Teils dieser Aufgabe besteht nach der Erfindung in einem Verfahren mit den Merkmalen von Anspruch 1. Der gegenständliche Teil dieser Aufgabe wird durch ein die Merkmale von Anspruch 13 enthaltenes Gerät sowie ein System nach den Merkmalen von Anspruch 14 gelöst. Der zweite und letzte verfahrens-technische Teil der Aufgabe findet seine Lösungen in den Merkmalen von Anspruch 14. Vorteilhafte Weiterbildungen sind Inhalt der jeweils abhängigen Ansprüche 2 bis 12 sowie 15 bis 22.

Hiernach geht die Erfindung zunächst von einem Verfahren zur thermischen Entwesung eines Raums und/oder mindestens eines in einem Raum befindlichen Gegenstands aus, bei dem für die Dauer einer Behandlungszeit die im Raum vorhandene Raumluft von ihrer jeweiligen Ist-Temperatur auf eine Soll-Temperatur erhitzt wird. Erfindungsgemäß wird nun vorgeschlagen, dass der Raumluft wenigstens bereichsweise ein Anteil ihrer jeweiligen Feuchtigkeit entzogen wird. Das Entziehen der Feuchtigkeit kann dabei entweder vor oder während der Erhitzung der Raumluft erfolgen. Selbstverständlich kann der Feuchtigkeitsentzug auch vor Erhitzung der Raumluft beginnen und währenddessen zumindest über einen Zeitraum hinweg weiter beibehalten werden. Grundsätzlich ist denkbar, dass der anteilige Entzug der Feuchtigkeit aus der Raumluft in Abhängigkeit ihrer jeweiligen, sich während der Erhitzung entsprechend ändernden, Ist-Temperatur erfolgen kann.

Der sich hieraus ergebende Vorteil ist darin zu sehen, dass durch den aktiven Entzug von Feuchtigkeit aus der Raumluft die mit der so behandelten Raumluft in Kontakt stehenden Schädlinge zunehmend dehydrieren, was die Erhitzung ihrer körpereigenen Zellen beschleunigt. Mit anderen Worten führt die Reduktion der Luftfeuchtigkeit zu einer entsprechend trockeneren Raumluft, wodurch deren Fähigkeit zur Aufnahme von Feuchtigkeit wiederum steigt, so dass die Schädlinge selbst vermehrt Flüssigkeit an die Raumluft verlieren. Tatsächlich geht bei Flüssigkeiten der Wechsel ihres Aggregatzustands von flüssig zu gasförmig mit einem kühlenden Effekt einher (Verdunstungskälte), welcher umso geringer und/oder kürzer ausfällt, je weniger Flüssigkeit hierfür zur Verfügung steht. Da der Anteil der Feuchtigkeit in der Raumluft durch deren Entzug aktiv reduziert wird, schreitet die temperaturbedingte Denaturierung von Proteinen (Eiweißen) der Schädlinge daher rascher voran, was letztlich schneller und effektiver zu dem bereits näher beschriebenen und gewünschten Ziel führt.

Bevorzugt wird der Raumluft dabei so lange Feuchtigkeit entzogen, bis deren Ist-Luftfeuchtigkeit wenigstens bereichsweise auf eine Soll-Luftfeuchtigkeit hin abgesenkt ist. Als Ist-Luftfeuchtigkeit wird im Rahmen der Erfindung ein Wert für den Gehalt oder Anteil der jeweils aktuellen Luftfeuchtigkeit beziehungsweise Feuchtigkeit der Raumluft angesehen, während die Soll-Luftfeuchtigkeit einen Wert für den jeweils gewünschten und insofern angestrebten Gehalt oder Anteil der Feuchtigkeit in der Raumluft meint. Grundsätzlich kann es sich bei der in Rede stehenden Ist- und/oder Soll-Luftfeuchtigkeit um deren jeweils relativen oder absoluten Wert handeln. Denkbar ist auch, dass sowohl für die Ist- als auch für die Soll- Luftfeuchtigkeit deren jeweils relativer wie auch absoluter Wert beachtet und entsprechend manipuliert wird.

Während die absolute Luftfeuchtigkeit nur die jeweilige Masse an in der Luft vorhandenen Wasserteilchen, insbesondere in g/cm³, beschreibt, bezieht die relative Luftfeuchtigkeit den Einfluss der Lufttemperatur auf deren Fähigkeit zur Wasseraufnahme mit ein. Allgemein gilt, dass die Wasseraufnahmefähigkeit der Luft mit steigender Temperatur zunimmt, während sie mit sinkender Temperatur abnimmt. Folglich ist auch die Sättigung der Luft mit Wasserteilchen abhängig von ihrer Temperatur, wobei Sättigung die maximal in Luft aufnehmbare Masse an Wasserteilchen meint. Somit ist Luft umso schneller gesättigt, je kühler sie ist und umgekehrt. Da mit Blick auf das thermische Entwesungsverfahren die Fähigkeit der Raumluft zur Aufnahme von Wasser mit zunehmender Erhitzung steigt, fällt der Wert ihrer relativen Luftfeuchtigkeit auch ohne aktiven Entzug der Feuchtigkeit aus der Raumluft naturgemäß ab. Die erfindungsgemäße Maßnahme des Feuchtigkeitsentzug ist daher so zu verstehen, dass diese über die bei Erhitzung der Raumluft ohnehin eintretende Abnahme der relativen Luftfeuchtigkeit hinaus eine zusätzlichen Reduktion der relativen Luftfeuchtigkeit bewirkt.

Gemäß einer besonders bevorzugten Weiterentwicklung des grundsätzlichen Erfindungsgedankens kann das Erhitzen der Raumluft auf die angestrebte Soll-Temperatur erst dann erfolgen, sobald im Rahmen der aktiven Absenkung der jeweiligen Ist-Luftfeuchtigkeit die gewünschte, insbesondere relative oder/und absolute, Soll-Luftfeuchtigkeit der Raumluft erreicht ist. Dies meint eine Trennung von Feuchtigkeitsentzug und Raumlufterhitzung in zwei aufeinanderfolgenden Maßnahmen. Durch die während des Feuchtigkeitsentzugs nicht aktiv veränderte Temperatur der Raumluft werden dabei ihre absolute Ist-Luftfeuchtigkeit und insbesondere auch ihre relative Ist-Luftfeuchtigkeit ausschließlich durch die Maßnahme des Feuchtigkeitsentzugs auf die entsprechende Soll-Luftfeuchtigkeit hin abgesenkt.

Die Erfindung sieht grundsätzlich vor, dass die im Rahmen ihrer Erhitzung angestrebte Soll-Temperatur der Raumluft von 40°C bis 70°C betragen kann. In vorteilhafter Weise kann die angestrebte Soll-Temperatur von 45°C bis 65°C betragen. Bevorzugt kann die angestrebte Soll-Temperatur der Raumluft von 50°C bis 60°C oder 55°C +/- 1°C bis 4°C, insbesondere +/-2°C oder 3°C, betragen. Die verwendete Temperatur oder der verwendete Temperaturbereich hat sich als besonders effektiv im Hinblick auf das konkrete Ziel des erfindungsgemäßen Entwesungsverfahrens herausgestellt. In jedem Fall kann die jeweils angestrebte Soll-Temperatur in Abhängigkeit der Art und/oder Anzahl von im Raum befindlichen Gegenständen gewählt werden. So lassen beispielsweise temperaturempfindliche Gegenstände eine entsprechend geringere Soll-Temperatur zu, während gegenüber höheren Temperaturen unempfindliche Gegenstände eine tendenziell höhere Soll-Temperatur der Raumluft ermöglichen. Je höher die Soll-Temperatur der Raumluft gewählt werden kann, umso effektiver ist deren Einfluss auf die Beseitigung von Schädlingen, was eine tendenziell kürzere Behandlungszeit erlaubt. Demgegenüber wird eine längere Behandlungszeit benötigt, sofern das erfindungsgemäße Verfahren mit einer im Vergleich niedrigeren Soll-Temperatur durchgeführt wird.

Da die Temperatur der Raumluft, insbesondere während ihrer Erhitzung, nicht unbedingt in allen Bereichen des Raums den gleichen Wert aufweisen muss, kann es einer Festlegung dafür bedürfen, wann deren angestrebte Soll-Temperatur als erreicht anzusehen ist. So kann die angestrebte Soll-Temperatur der Raumluft beispielsweise dann als erreicht angesehen werden, wenn diese in nur einem Bereich des Raums vorherrscht. Bevorzugt sollte dieser Raumbereich dann möglichst weit von einer oder mehreren möglichen Quelle/n für die Erhitzung der Raumluft entfernt sein, um eine ausreichend hohe Erwärmung der Raumluft zwischen diesem Raumbereich und der/den möglichen Heizquelle/n zutreffend annehmen zu können. Alternativ kann auch ein Durchschnittswert voneinander unterschiedlicher Temperaturen der Raumluft in zwei oder mehr Raumbereichen herangezogen werden, so dass die angestrebte Soll-Temperatur der Raumluft dann als erreicht angesehen werden kann, wenn dieser Durchschnittswert dem Wert der angestrebten Soll-Temperatur zumindest entspricht.

Was die Beibehaltungsdauer der angestrebten Soll-Temperatur und insofern die, insbesondere thermische, Behandlungszeit der Raumluft angeht, so kann diese von 30 Minuten bis 180 Minuten betragen. Die Behandlungszeit kann andererseits von 45 Minuten bis 150 Minuten betragen. Bevorzugt kann die Behandlungszeit von 60 Minuten bis 120 Minuten betragen. Alternativ kann die Behandlungszeit auch einem der nachfolgend genannten Intervalle oder Werte entsprechen:
- von 65 Minuten bis 115 Minuten,
- von 70 Minuten bis 110 Minuten,
- von 75 Minuten bis 105 Minuten,
- von 80 Minuten bis 100 Minuten,
- von 85 Minuten bis 95 Minuten,
- 90 Minuten +/- 1 Minute bis 4 Minuten oder 2 Minuten oder 3 Minuten.

Die jeweilige Behandlungszeit kann grundsätzlich beispielsweise in Abhängigkeit der Art und/oder Anzahl von im Raum befindlichen Gegenständen gewählt werden.

Mit Blick auf die für das erfindungsgemäße Verfahren anstrebbare absolute Soll-Luftfeuchtigkeit der Raumluft kann diese von 2,0 g/m³ bis kleiner 6,9 g/m³ betragen. Alternativ kann die absolute Soll-Luftfeuchtigkeit von 2,0 g/m³ bis 6,0 g/m³ betragen. Bevorzugt kann die absolute Soll- Luftfeuchtigkeit von 3,0 g/m³ bis 5,0 g/m³ betragen. Alternativ kann die absolute Soll-Luftfeuchtigkeit auch einem der nachfolgend genannten Intervalle oder Werte entsprechen:
- von 3,1 g/m³ bis 4,9 g/m³,
- von 3,2 g/m³ bis 4,8 g/m³,
- von 3,3 g/m³ bis 4,7 g/m³,
- von 3,4 g/m³ bis 4,6 g/m³,
- von 3,5 g/m³ bis 4,5 g/m³,
- von 3,6 g/m³ bis 4,4 g/m³,
- von 3,7 g/m³ bis 4,3 g/m³,
- von 3,8 g/m³ bis 4,2 g/m³,
- von 3,9 g/m³ bis 4,1 g/m³,
- von 4,0 g/m³.

Die angestrebte absolute Soll-Luftfeuchtigkeit der Raumluft kann grundsätzlich beispielsweise in Abhängigkeit der Art und/oder Anzahl von im Raum befindlichen Gegenständen gewählt werden.

Da die absolute Soll-Luftfeuchtigkeit der Raumluft nicht unbedingt in allen Bereichen des Raums den gleichen Wert aufweisen muss, kann es einer Festlegung bedürfen, wann deren angestrebte absolute Soll-Luftfeuchtigkeit als erreicht anzusehen ist. So kann die angestrebte absolute Soll- Luftfeuchtigkeit der Raumluft beispielsweise dann als erreicht angesehen werden, wenn diese in nur einem Bereich des Raums vorherrscht. Bevorzugt sollte dieser Raumbereich dann möglichst weit von einem oder mehreren möglichen Mittel/n für den Entzug von Feuchtigkeit aus der Raumluft entfernt sein, um auch für die zwischen diesem Raumbereich und dem/den möglichen Mittel/n befindliche Raumluft einen zumindest nah an der angestrebten absoluten Soll-Luftfeuchtigkeit gelegenen Wert für die dort vorhandene absolute Soll-Luftfeuchtigkeit zutreffend annehmen zu können. Alternativ kann auch ein Durchschnittswert voneinander unterschiedlicher Werte der absoluten Soll- Luftfeuchtigkeit der Raumluft in zwei oder mehr Raumbereichen herangezogen werden, so dass die angestrebte absolute Soll- Luftfeuchtigkeit der Raumluft dann als erreicht angesehen werden kann, wenn der Durchschnittswert dem Wert der angestrebten absoluten Soll-Luftfeuchtigkeit zumindest entspricht.

Nach einer bevorzugten Weiterbildung kann die für das erfindungsgemäße Verfahren anstrebbare relative Soll-Luftfeuchtigkeit der Raumluft von 5% bis kleiner 40% betragen. Alternativ kann die relative Soll-Luftfeuchtigkeit von 5% bis 30% betragen. Bevorzugt kann die relative Soll- Luftfeuchtigkeit von 10% bis 20% betragen. Alternativ kann die relative Soll-Luftfeuchtigkeit auch einem der nachfolgend genannten Intervalle oder Werte entsprechen:
- von 6% bis 39%,
- von 7% bis 38%,
- von 8% bis 37%,
- von 9% bis 36%,
- von 10% bis 35%,
- von 11% bis 34%,
- von 12% bis 33%,
- von 13% bis 32%,
- von 14% bis 31%,
- von 15% bis 30%,
- von 16% bis 29%,
- von 17% bis 28%,
- von 18% bis 27%,
- von 19% bis 26%,
- von 20% bis 25%,
- von 21% bis 24%,
- von 22% bis 23%,
- 22,5%.

Die angestrebte relative Soll-Luftfeuchtigkeit der Raumluft kann grundsätzlich beispielsweise in Abhängigkeit der Art und/oder Anzahl von im Raum befindlichen Gegenständen gewählt werden.

Da die relative Soll-Luftfeuchtigkeit der Raumluft nicht unbedingt in allen Bereichen des Raums den gleichen Wert aufweisen muss, kann es einer Festlegung bedürfen, wann deren angestrebte relative Soll-Luftfeuchtigkeit als erreicht anzusehen ist. So kann die angestrebte relative Soll- Luftfeuchtigkeit der Raumluft beispielsweise dann als erreicht angesehen werden, wenn diese in nur einem Bereich des Raums vorherrscht. Bevorzugt sollte dieser Raumbereich dann möglichst weit von einem oder mehreren möglichen Mittel/n für den Entzug von Feuchtigkeit aus der Raumluft entfernt sein, um auch für die zwischen diesem Raumbereich und dem/den möglichen Mittel/n befindliche Raumluft einen zumindest nah an der angestrebten relativen Soll-Luftfeuchtigkeit gelegenen Wert für die dort vorhandene relative Soll-Luftfeuchtigkeit zutreffend annehmen zu können. Alternativ kann auch ein Durchschnittswert voneinander unterschiedlicher Werte der relativen Soll-Luftfeuchtigkeit der Raumluft in zwei oder mehr Raumbereichen herangezogen werden, so dass die angestrebte relative Soll-Luftfeuchtigkeit der Raumluft dann als erreicht angesehen werden kann, wenn der Durchschnittswert dem Wert der angestrebten relativen Soll-Luftfeuchtigkeit zumindest entspricht.

Die Erfindung sieht vor, dass wenigstens für die Dauer der Manipulation der jeweiligen Ist-Temperatur der Raumluft ein zur wenigstens bereichsweisen Erhitzung der Raumluft ausgebildetes Gerät innerhalb des Raums angeordnet wird oder ist. Mit anderen Worten kann im Rahmen des erfindungsgemäßen Verfahrens dieses Gerät dafür eingesetzt werden, um die Raumluft wenigstens bereichsweise von ihrer jeweiligen Ist-Temperatur auf die angestrebte Soll-Temperatur zu erhitzen. Hierzu kann es sich bevorzugt um ein mobiles Gerät handeln. Ergänzend kann das Gerät auch dazu ausgebildet sein und eingesetzt werden, um der Raumluft aktiv Feuchtigkeit zu entziehen. Auf diese Weise reicht der Einsatz eines dann als Kombi-Gerät bezeichenbaren Geräts aus, welches in Bezug auf die Raumluft dann sowohl dem erfindungsgemäßen Feuchtigkeitsentzug als auch der erfindungsgemäßen Erhitzung dient oder eine dieser beiden Maßnahmen zumindest unterstützt. Da ein solches Kombi-Gerät dann beide hier relevanten Funktionen (Entfeuchten, Erhitzen) in sich vereint, können diese im Rahmen des Verfahrens nacheinander oder parallel oder zumindest temporär gleichzeitig genutzt werden.

Alternativ oder ergänzend ist vorgesehen, dass wenigstens für die Dauer der Manipulation der Feuchtigkeit der Raumluft ein zum wenigstens bereichsweisen Entzug von Feuchtigkeit aus der Raumluft ausgebildetes Gerät innerhalb des Raums angeordnet werden kann oder angeordnet ist. Mit anderen Worten kann im Rahmen des erfindungsgemäßen Verfahrens besagtes Gerät dafür eingesetzt werden, um der Raumluft wenigstens bereichsweise einen Anteil ihrer Feuchte beziehungsweise Luftfeuchtigkeit zu entziehen, insbesondere um deren jeweilige relative oder/und absolute Ist-Luftfeuchtigkeit auf die angestrebte relative oder/und absolute Soll-Luftfeuchtigkeit hin abzusenken. Hierzu kann es sich bevorzugt um ein mobiles Gerät handeln. Ergänzend kann das Gerät auch dazu ausgebildet sein und eingesetzt werden, um die Raumluft aktiv zu erhitzen. Auf diese Weise reicht der Einsatz eines dann als Kombi-Gerät bezeichenbaren Geräts aus, welches in Bezug auf die Raumluft dann sowohl dem erfindungsgemäßen Feuchtigkeitsentzug als auch der erfindungsgemäßen Erhitzung dient oder eine dieser beiden Maßnahmen zumindest unterstützt. Da ein solches Kombi-Gerät dann beide hier relevanten Funktionen (Entfeuchten, Erhitzen) in sich vereint, können diese im Rahmen des Verfahrens nacheinander oder parallel oder zumindest temporär gleichzeitig genutzt werden.

Vorteilhafterweise kann das zuvor erwähnte Gerät beziehungsweise Kombi-Gerät oder eines der zuvor erwähnten Geräte beziehungsweise Kombi-Geräte nach Ablauf der jeweiligen Behandlungszeit der Raumluft ausgeschaltet werden. Dies meint, dass besagtes Gerät dann seine Funktion/en des Erhitzens oder/und Entfeuchtens der Raumluft einstellt oder zumindest in Bezug auf seine Leistung absenkt. Hierzu ist somit auch eine Leistungsabsenkung oder ein Umschalten vom eingeschalteten Zustand in einen Standby Betrieb möglich, was vorliegend ebenfalls unter dem Begriff des Ausschaltens verstanden wird.

Grundsätzlich wird eine aktive Messung der Raumlufttemperatur vor oder/und während der thermischen Entwesung bevorzugt. Hierzu kann die jeweilige Ist-Temperatur der Raumluft durch wenigstens einen im Raum angeordneten Sensor erfasst werden. Selbstverständlich ist hierfür auch eine, insbesondere als gleichwertig anzusehende, Anordnung wenigstens eines Sensors an einer den Raum begrenzenden Fläche oder/und an oder in einem im Raum befindlichen Gegenstand denkbar.

Je nach Einsatzort und/oder Einsatzart des erfindungsgemäßen Verfahrens kann es vorteilhaft sein, wenn die aktive Erhitzung der Raumluft zu keinem linearen Anstieg ihrer Temperatur führt. Bevorzugt kann die jeweilige Ist-Temperatur der Raumluft hierzu stufenweise auf die zu erreichende Soll-Temperatur erhöht werden. Hierdurch kann das Registrieren des Temperaturanstiegs für Schädlinge erschwert sein, wohingegen ein linearer Anstieg in der Raumlufttemperatur zu deren Flucht führen kann, um der dann als Gefahr erkannten Aufheizung der Raumluft zu entgehen. Selbstverständlich ist auch jeder andere nicht lineare Verlauf denkbar, wie beispielsweise eine exponentielle Erhitzung der Raumluft.

Das zuvor vorgestellte erfindungsgemäße Verfahren bietet eine überaus schnelle und insgesamt effektive Möglichkeit zur thermischen Entwesung eines Raums und/oder mindestens eines in einem Raum befindlichen Gegenstands. Dies liegt im Wesentlichen an der gezielten Beeinflussung der Luftfeuchtigkeit im Raum, durch deren aktive Absenkung das Ziel des Verfahrens innerhalb eines kürzeren als sonst notwendigen Zeitraums erreicht werden kann. In jedem Fall erweist sich das erfindungsgemäße Verfahren als leistungsfähiger gegenüber der reinen Erhitzung der Raumluft über einen definierten Zeitraum hinweg.

Die Erfindung ist weiterhin auf ein Gerät gerichtet, welches der Durchführung des erfindungsgemäßen Verfahrens dient. Bei diesem Gerät kann es sich um eines zur Erhitzung oder zur Entfeuchtung von Raumluft handeln. Alternativ kann dieses auch als Kombi-Gerät ausgestaltet sein, welches sowohl zur Erhitzung als auch zur Entfeuchtung der Raumluft eingesetzt werden kann. Grundsätzlich kann das Gerät beziehungsweise Kombi-Gerät eine mobile Ausgestaltung aufweisen. Dies meint dessen mit üblichen Mitteln mögliche Transportierbarkeit, insbesondere keinen festen stationären Einbau. Die sich aus diesem Gerät beziehungsweise Kombi-Gerät heraus ergebenden Vorteile wurden bereits zuvor im Zusammenhang mit dem erfindungsgemäßen Verfahren näher erläutert, so dass zur Vermeidung von Wiederholungen an dieser Stelle auf die entsprechenden Ausführungen hierzu verwiesen wird.

Auch ist die Erfindung auf ein System gerichtet, welches der Durchführung des erfindungsgemäßen Verfahrens dient und hierzu wenigstens ein zum Entzug von Feuchtigkeit aus Raumluft und/ oder zur Erhitzung von Raumluft ausgebildetes Gerät umfasst. Bevorzugt kann es sich bei diesem Gerät um das zuvor erwähnte erfindungsgemäße Gerät beziehungsweise Kombi-Gerät handeln, insbesondere in dessen mobiler Ausgestaltung. Weiterhin umfasst das erfindungsgemäße System wenigstens eine Datenbank. Bei dieser kann es sich beispielsweise um eine im jeweiligen zu behandelnden Raum oder eine zumindest innerhalb des den zu behandelnden Raum aufweisenden Gebäudes angeordnete oder anzuordnende Datenbank handeln. Hierzu kann ein entsprechendes physisches Speichermedium vorgesehen sein. Besonders bevorzugt kann besagte Datenbank als Teil einer Cloud arbeiten beziehungsweise Teil einer Cloud sein. Dies meint einen externen Datenspeicher, bei dem es sich beispielsweise um einen onlinebasierten Speicher und Serverdienst handeln kann. Die in Rede stehende Datenbank kann somit zentral oder dezentral arbeiten. Insbesondere als dezentrale Datenbank bietet diese eine hohe Ausfallsicherheit und/oder einfache Erreichbarkeit, und zwar unabhängig vom jeweiligen Aufstellort des Geräts des erfindungsgemäßen Systems. Selbiges gilt für den Aufenthaltsort einer die Datenbank nutzenden Person und/oder eines mit der Datenbank verbindbaren Mittels, wie beispielsweise dem Gerät oder/und einem Sensor oder/und einem mobilen oder stationären Endgerät, wie beispielsweise einem Smartphone oder einem Tablet oder einem Laptop beziehungsweise Notebook oder einem PC oder einem Handscanner, um nur einige mögliche Ausgestaltungsformen einer nicht abschließenden Aufzählung zu nennen.

Gemäß einer vorteilhaften Weiterbildung des erfindungsgemäßen Systems kann dieses mindestens einen Sensor und/oder wenigstens ein Markierungsmittel umfassen. Bei dem Sensor kann es sich bevorzugt um einen solchen handeln, der zur Erfassung von Temperatur, insbesondere Raumtemperatur, oder/und Feuchte, insbesondere Luftfeuchtigkeit, ausgebildet ist. Unter einem Markierungsmittel wird im Rahmen der Erfindung ein solches Mittel verstanden, welches eine Zuordnung des zu behandelnden Raums oder/und des zu behandelnden Gegenstands erlaubt. Hierzu kann das Markierungsmittel beispielsweise so gestaltet sein, dass dieses im Raum beziehungsweise an einer den Raum begrenzenden Fläche oder an einer anderen Stelle anordenbar ist, so dass über das Markierungsmittel eine konkrete Verbindung beispielsweise zu etwaigen, insbesondere in der Datenbank, hinterlegten Informationen möglich ist. Selbiges gilt sinngemäß für eine Anbringung des Markierungsmittels in oder an einem Gegenstand. In vorteilhafter Weise kann das Markierungsmittel durch Kontakt oder bevorzugt kontaktlos "erfassbar" sein, wozu dieses beispielsweise einen optisch erfassbaren QR-Code oder/und eine Einrichtung zur drahtlosen Übertragung von in dem Markierungsmittel hinterlegten Daten aufweisen kann. Auf diese Weise kann das Markierungsmittel bequem beispielsweise über ein mobiles Endgerät "lesbar" oder/und "auslesbar" gestaltet sein, um durch die eindeutige Zuordnung beispielsweise damit verknüpfte Informationen zu erhalten und/oder Informationen hinterlegen zu können.

Hierzu kann beispielsweise ein spezielles Programm beziehungsweise eine App auf dem mobilen Endgerät installiert sein, um das Lesen oder/und Auslesen des Markierungsmittels zu ermöglichen oder/und um Informationen zu erhalten oder ablegen zu können.

Letztlich ist die Erfindung auf ein Verfahren zum Betrieb des erfindungsgemäßen Systems gerichtet, um einen Raum und/oder mindestens einen in einem Raum befindlichen Gegenstand zumindest temporär, also wenigstens für einen gewissen Zeitraum, zu entwesen. Hierzu ist oder/und wird wenigstens eine Information zu dem jeweiligen Raum und/oder dem jeweiligen Gegenstand in einer Datenbank abgelegt, wobei anhand eines in oder an dem Raum und/oder dem Gegenstand angeordneten oder anordenbaren Markierungsmittels wenigstens eine Information aus der Datenbank abrufbar ist oder abgerufen wird.

Hierzu ist oder/und wird wenigstens eine Information zu dem jeweiligen Raum in einer Datenbank abgelegt, wobei die wenigstens eine Information anhand eines in oder an dem Raum angeordneten oder anordenbaren Markierungsmittels wieder aus der Datenbank abrufbar ist oder abgerufen wird. Alternativ oder ergänzend hierzu ist oder wird wenigstens eine Information zu dem jeweiligen Gegenstand in einer oder der Datenbank abgelegt, wobei die wenigstens eine Information anhand eines in oder an dem Gegenstand angeordneten oder anordenbaren Markierungsmittels wieder aus der Datenbank abrufbar ist oder abgerufen wird. In jedem Fall dient das Markierungsmittel dazu, eine eindeutige Zuordnung der wenigstens einen, insbesondere individuellen, Information zu dem Raum oder/und dem Gegenstand herzustellen, um diese gezielt zu hinterlegen oder/und abrufen zu können. Dies beginnt insofern bereits beim Ablegen einer Information in der Datenbank, welche durch das Markierungsmittel eindeutig dem jeweiligen Raum oder/und Gegenstand zugeordnet ist oder wird. Über das Markierungsmittel kann diese beziehungsweise können die jeweiligen Information/en dann gezielt wieder abgerufen werden. Neben dem Abruf einer Information zur beispielsweise rein strukturellen Beschaffenheit und/oder für die Durchführung der Entwesung relevanter Parameter kann so auch wenigstens eine sich aus dem laufenden oder beendeten Prozess ergebende Information, insbesondere zumindest temporär oder/und wenigstens in festgelegter Anzahl zusammen mit bereits abgelegten Informationen aufeinander folgend, abgelegt werden.

In besonders bevorzugter Weise kann die mindestens eine innerhalb der Datenbank abgelegte oder/und ablegbare Information wenigstens einen der nachfolgend aufgeführten Inhalte aufweisen:
- Zeitpunkt/e der, insbesondere zuletzt, durchgeführten Entwesung/en,
- Zeitpunkt/e der, insbesondere demnächst, fälligen Entwesung/en,
- Höhe der zur thermischen Behandlung erforderlichen Soll-Temperatur der Raumluft,
- Höhe/n der zur thermischen Behandlung, insbesondere zuletzt, erreichten Temperatur/en der Raumluft,
- zeitliche/r Verläufe/Verlauf der zur thermischen Behandlung, insbesondere zuletzt, erreichten Temperaturen der Raumluft während der Behandlungszeit/en,
- Länge der zur thermischen Behandlung erforderlichen Behandlungszeit,
- Länge der zur thermischen Behandlung, insbesondere zuletzt, abgelaufenen Behandlungszeit/en,
- Höhe der vor oder/und während der thermischen Behandlung erforderlichen absoluten Soll-Luftfeuchtigkeit/en der Raumluft,
- Höhe der vor oder/und während der thermischen Behandlung, insbesondere zuletzt, erreichten absoluten Ist-Luftfeuchtigkeit/en der Raumluft,
- Höhe der vor oder/und während der thermischen Behandlung erforderlichen relativen Soll-Luftfeuchtigkeit/en der Raumluft,
- Höhe der vor oder/und während der thermischen Behandlung, insbesondere zuletzt, erreichten relativen Ist- Luftfeuchtigkeit/en der Raumluft,
- zeitlicher Verlauf der vor oder/und während der thermischen Behandlung erreichten absoluten Ist-Luftfeuchtigkeit/en der Raumluft,
- zeitlicher Verlauf der vor oder/und während der thermischen Behandlung erreichten relativen Ist-Luftfeuchtigkeit/en der Raumluft,
- Größe und/oder Abmessungen des Raums,
- Grundriß des Raums,
- Art des Gegenstands,
- maximal zulässige Temperatur des Gegenstands,
- Hinweis/e zur Vorbereitung des Raums im Vorfeld des Entwesungsprozesses,
- Hinweis/e zur Vorbereitung des Gegenstands im Vorfeld des Entwesungsprozesses.

Die in der Datenbank abgelegte/n oder/und ablegbare/n Information/en erlauben die Etablierung eines Hygienekonzepts für einen einzelnen Raum oder/und Gegenstand. Insbesondere mehrere Räume oder/und Gegenstände aufweisende Gebäude lassen sich auf diese Weise in Bezug auf deren notwendige Entwesung bequem managen, was beispielsweise im Bereich von Hotels oder/und Ferienwohnanlagen oder/und Jugendherbergen oder/und Kasernen oder/und Flüchtlingsunterkünften oder/und Justizvollzugsanstalten überaus vorteilhaft ist. Auf diese Weise liegt stets der notwendige Überblick dahingehend vor, wann beispielsweise die letzte Entwesung durchgeführt wurde oder/und wann die nächste Entwesung ansteht. Gleichzeitig kann das Ablegen von Informationen für mitunter notwendige Dokumentationszwecke dienen, so dass auch über einen längeren Zeitraum hinweg ein Nachweis darüber vorliegt, was zu welchem Zeitpunkt wo gemacht wurde. Insgesamt gestattet das erfindungsgemäße Verfahren so zudem eine gezielte Planung sowie Prüfung und Nachverfolgung im Rahmen eines solchen Hygienekonzepts.

In vorteilhafter Weise kann eine in der Datenbank abgelegte Information dazu dienen, einer an sich nicht fachkundigen oder/und mit der Örtlichkeit vertrauten aber mit der Entwesung beauftragten Person konkrete Handlungsanweisungen zu geben, wie beispielsweise in Bezug auf die Einstellung oder/und den Aufstellort eines, bevorzugt mobilen, Geräts zur Raumluftentfeuchtung und/oder -erhitzung. Überdies können so auch weitere Parameter hinterlegt sein, wie etwas die im konkreten Fall notwendige beziehungsweise anzustrebende Behandlungszeit oder/und Soll-Temperatur oder/und Soll-Luftfeuchte, um nur einige mögliche Punkte einer nicht abgeschlossenen beispielhaften Aufzählung zu nennen.

Bevorzugt kann es sich bei dem Markierungsmittel um einen QR-Code handeln. Alternativ kann das Markierungsmittel einen QR-Code umfassen. Der sich aus einem rein optisch lesbaren beziehungsweise erfassbaren QR-Code ergebende Vorteil liegt vor allem in seiner einfachen sowie kostengünstigen Herstellung, insbesondere im Vergleich beispielsweise zu einem RFID-Chip. Digitale Endgeräte verfügen nahezu nahezu standardmäßig über wenigstens eine Kamera, welche in Kombination mit einem entsprechenden Programm oder einer App direkt genutzt werden kann, um den jeweiligen QR-Code zu lesen und/oder zu verarbeiten. Bereits ein handelsüblicher Drucker reicht aus, um quasi vor Ort einen durch ein entsprechendes Programm oder eine App erzeugten QR-Code auf ein geeignetes Trägermaterial aufzubringen. So ist es auch später möglich, das Markierungsmittel beispielsweise aufgrund einer Beschädigung und/ oder Alterung auf einfache Weise zu erneuern. Der QR-Code kann bei Bedarf neu ausgedruckt oder beispielsweise mittels eines Kopierverfahrens einfach vervielfältigt werden. Auf diesem Wege ist es auch möglich, das Trägermaterial über die Zeit zu wechseln, indem der QR-Code dann auf einem anderen Trägermaterial aufgebracht wird.

Der QR-Code beziehungsweise das Trägermaterial des Markierungsmittels kann selbstklebend ausgestaltet sein, beispielsweise in Form eines Aufklebers, um leicht an geeigneter Stelle angebracht zu werden. Selbstverständlich sind auch weitere Ausgestaltungsmöglichkeiten denkbar, wie beispielsweise als An- oder Aufhänger sowie Aufsteller, um nur einige Varianten zu nennen. Diese können dann über ein Mittel zum An- beziehungsweise Aufhängen oder/und ein magnetisches Mittel verfügen, um an geeigneter Stelle festgelegt zu werden.

Im Rahmen der Erfindung wird es als vorteilhaft angesehen, wenn sich die Datenbank innerhalb einer Cloud befindet. Dies meint, dass wenigstens ein Teil der Cloud selbst als Datenbank dient, in der die jeweilige/n Information/en ablegbar und/oder aus dieser heraus aufrufbar ist/sind. Die sich hieraus ergebenden Vorteile wurden bereits an anderer Stelle näher erläutert, so dass zur Vermeidung von Wiederholungen an dieser Stelle auf die entsprechenden Ausführungen hierzu verwiesen wird.

Bevorzugt kann der Zeitpunkt der fälligen Entwesung taggenau und/oder mit einem zeitlichen Vorlauf signalisiert werden, wie etwa optisch und/oder akustisch. Der jeweilige Entwesungszeitpunkt ist als wenigstens eine entsprechende Information in der Datenbank abgelegt. Besagte Signalisierung kann dabei in vorteilhafter Weise ausschließlich oder zusätzlich mittels eines mobilen digitalen Endgeräts erfolgen. Alternativ oder ergänzend hierzu kann die Signalisierung ausschließlich oder zusätzlich mittels eines stationären digitalen Endgeräts erfolgen.

Der Zeitpunkt der zuletzt durchgeführten Entwesung eines Raums oder/und eines Gegenstands kann in vorteilhafter Weise als wenigstens eine Information in der Datenbank abgelegt werden. Die eigentliche Zuordnung dieses Zeitpunkts zu dem jeweiligen Raum oder/und dem jeweiligen Gegenstand erfolgt durch Auslesen des Markierungsmittels des Raums oder/und des Gegenstands. Damit sind so vor allem mehrere Räume oder/und Gegenstände leicht zu verwalten, da der jeweilige Zeitpunkt ihrer zuletzt durchgeführten Entwesung eindeutig dem jeweiligen Raum oder/und Gegenstand zugeordnet ist. Auf diese Weise können beispielsweise zwei benachbarte Räume zu völlig unterschiedlichen Zeitpunkten einer Entwesung unterzogen werden, wenn etwa der in der Datenbank abgelegte Zeitpunkt der letzten Entwesung des einen Raums weiter zurückliegt als der in der Datenbank abgelegte Zeitpunkt der letzten Entwesung des anderen Raums. Das Auslesen des Markierungsmittels kann vor, während oder nach der eigentlichen Entwesung erfolgen. Bevorzugt kann das Auslesen mit einem mobilen digitalen Endgerät durchgeführt werden. Denkbar ist, dass das Auslesen des Markierungsmittels beispielsweise sowohl zu Beginn als auch am Ende der Entwesung erfolgt, so dass sowohl der Zeitpunkt des Entwesungsbeginns als auch der Zeitpunkt des Entwesungsendes jeweils als Information in der Datenbank festgehalten werden. Auf diese Weise findet nicht nur eine Dokumentation der zuletzt durchgeführten Entwesung statt, sondern auch zu deren Durchführungsdauer. Grundsätzlich kann auf dem digitalen Endgerät ein Programm oder eine App installiert sein, wodurch entweder automatisch oder durch die vorherige Anwahl eines entsprechenden Menüpunktes allein das Auslesen des Markierungsmittels als Beginn oder/und Ende des Entwesungsprozesses gewertet wird, so dass der jeweilige Zeitpunkt des Auslesens sodann als Zeitpunkt des Beginns oder/und des Endes der Entwesung als Information in der Datenbank abgelegt wird/ werden.

Nach einer besonders bevorzugten Weiterbildung des erfindungsgemäßen Verfahrens kann wenigstens eine der nachfolgend genannten Informationen über mindestens einen Sensor erfasst werden oder/und wenigstens einen von diesem gelieferten Wert beinhalten. Die so erfasste/n Information/en wird/werden dann kabelgebunden oder/und kabellos an mindestens ein Gerät und/oder die Datenbank und/oder eine Steuerung übermittelt. Bei dem Gerät kann es sich um ein mobiles Gerät handeln. In jedem Fall ist das Gerät dazu ausgebildet, die jeweilige Ist-Temperatur der Raumluft zu manipulieren und/oder der Raumluft Feuchtigkeit zu entziehen. Bei der wenigstens einen Information kann es sich um wenigstens eine der nachfolgend genannten möglichen Informationen handeln:
- Wert/e der während der thermischen Behandlung erreichten Ist-Temperatur/en der Raumluft,
- zeitlicher Verlauf der während der thermischen Behandlung erreichten Ist-Temperatur/en der Raumluft während der Behandlungszeit/en,
- Länge der während der thermischen Behandlung abgelaufenen Behandlungszeit,
- Höhe der vor der thermischen Behandlung vorhandenen absoluten Ist-Luftfeuchtigkeit der Raumluft,
- Höhe der während der thermischen Behandlung erreichten absoluten Ist-Luftfeuchtigkeit/en der Raumluft,
- Höhe der vor der thermischen Behandlung vorhandenen relativen Ist-Luftfeuchtigkeit der Raumluft,
- Höhe der während der thermischen Behandlung erreichten relativen Ist-Luftfeuchtigkeit/en der Raumluft,
- zeitlicher Verlauf der vor oder/und während der thermischen Behandlung erreichten absoluten Ist Luftfeuchtigkeit/en der Raumluft,
- zeitlicher Verlauf der vor oder/und während der thermischen Behandlung erreichten relativen Ist Luftfeuchtigkeit/en der Raumluft.

Die Erfindung wird nachfolgend anhand eines in den Figuren schematisch dargestellten Ausführungsbeispiels näher erläutert, aus dem weitere vorteilhafte Einzelheiten und Wirkungen hervorgehen können. Es zeigen:
- Fig. 1: ein erfindungsgemäßes System zur Durchführung des erfindungsgemäßen Verfahrens,
- Fig. 2: ein erstes Diagramm zur schematisch beispielhaften Verdeutlichung einer ersten Maßnahme des erfindungsgemäßen Verfahrens sowie
- Fig. 3: ein zweites Diagramm zur schematisch beispielhaften Verdeutlichung einer zweiten Maßnahme des erfindungsgemäßen Verfahrens.

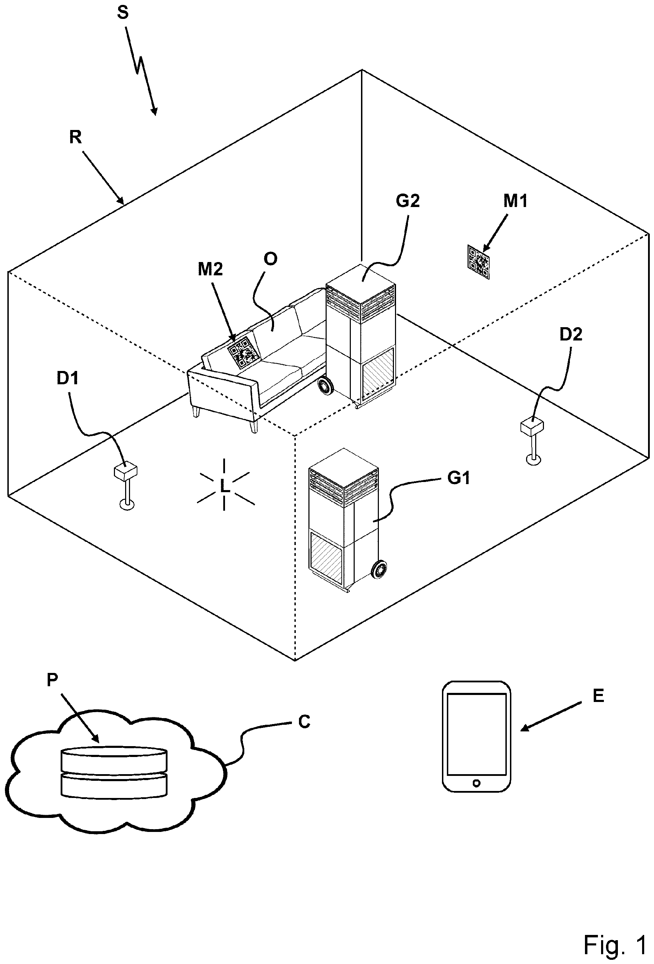

Fig. 1 zeigt ein erfindungsgemäßes System S, welches der Durchführung des erfindungsgemäßen Verfahrens zur thermischen Entwesung eines Raums R und/oder mindestens eines in einem Raum R befindlichen Gegenstands O dient. Rein beispielhaft umfasst das System S vorliegend insgesamt zwei mobile Geräte G1, G2 sowie eine Datenbank P, wobei die Datenbank P - wie hier exemplarisch angedeutet - Teil einer Cloud C sein kann. Erkennbar sind beide Geräte G1, G2 in einem hier nur angedeuteten Raum R angeordnet. Die den Raum R begrenzenden Kanten sind teilweise mit unterbrochenen Linien dargestellt, um trotz dessen Geschlossenheit einen Einblick in diesen zu gewähren. In dem hier gezeigten Beispielaufbau befindet sich ein Gegenstand O innerhalb des Raums R, bei dem es sich vorliegend um ein Sofa beziehungsweise eine Couch handelt. In anderen Fällen kann es sich bei dem Gegenstand O selbstredend auch um eine andere Ausgestaltung handeln, insbesondere um jede Art von Einrichtungsgegenstand.

Das erste Gerät G1 des hier gezeigten Beispiels ist zum Entzug von Feuchtigkeit aus der im Raum R befindlichen Raumluft L ausgebildet, wohingegen das zweite Gerät G2 zur Erhitzung der Raumluft L dient. Selbstverständlich können auch weitere derartige Geräte Bestandteil des Systems S sein. Denkbar ist auch nur wenigstens ein einzelnes Kombi-Gerät, welches beide Funktionen in sich vereint und in Bezug auf die Raumluft L insofern sowohl dem Feuchtigkeitsentzug als auch deren Erhitzung dient oder eine dieser beiden Maßnahmen zumindest unterstützt. Ein oder mehrere solcher Kombi-Geräte könnten auch mit mindestens einem der beiden Geräte G1, G2 zusammen zum Einsatz kommen.

Weiterhin umfasst der hier gezeigte beispielhafte Aufbau des Systems S insgesamt zwei Sensoren D1, D2, welche sich, insbesondere ebenfalls, innerhalb des Raums R befinden. Wenigstens einer dieser Sensoren D1, D2 ist zur Erfassung von Temperatur oder/und Feuchte ausgebildet. Rein beispielhaft dient in dem hier gezeigten Beispiel der erste Sensor D1 der Erfassung der Feuchte der Raumluft L - insofern also der Luftfeuchtigkeit -, während der zweite Sensor D2 die Erfassung der Temperatur der Raumluft L - insofern also der Raumtemperatur - ermöglicht. Alternativ kann in nicht dargestellter Weise beispielsweise der erste Sensor D1 der Erfassung der Feuchte des Gegenstands O und/oder der zweite Sensor D2 der Erfassung der Temperatur des Gegenstands O oder umgekehrt dienen. Hierzu wäre der jeweilige Sensor D1, D2 oder wären die Sensoren D1, D2 dann in eine entsprechend notwendige Nähe und/oder Ausrichtung zu dem Gegenstand O zu bringen, insbesondere an oder in dem Gegenstand O anzuordnen. Alternativ kann auch wenigstens einer der Sensoren D1, D2 eine Mehrfachfunktion erfüllen, indem er beispielsweise sowohl zur Erfassung von Feuchte als auch von Temperatur ausgebildet sein kann.

Der oder die Sensoren D1, D2 liefern durch diese erfassbare Daten, die in Form von Informationen oder als Teil einer Information bereitstehen, insbesondere für das Entwesungsverfahren oder/und darüber hinaus. Über mindestens eine hier nicht näher dargestellte kabelgebundene oder/und kabellose Verbindung kann wenigstens eine Information oder/und ein Teil der Daten beispielsweise an mindestens eines der Geräte G1, G2 oder/und an die Datenbank P übermittelt werden. Denkbar ist auch, dass wenigstens eines der Geräte G1, G2 oder/und mindestens einer der Sensoren D1, D2 auf diesem Wege eine Information oder/und einen Teil der Daten aus der Datenbank P erhält. Auf diese Weise kann beispielsweise eine Voreinstellung oder/und Kalibrierung erfolgen.

Mit Blick auf den in Fig. 1 beispielhaft dargestellten Umfang des Systems S wird deutlich, dass dieses zudem wenigstens ein Markierungsmittel M1, M2 umfasst. In dem hier exemplarisch gezeigten Aufbau sind insgesamt zwei Markierungsmittel M1, M2 vorhanden, von denen das erste Markierungsmittel M1 dem Raum R zugeordnet ist, welches hierfür rein beispielhaft an einer angedeuteten und den Raum R zu einer Seite hin begrenzenden Wandfläche festgelegt ist. Alternativ kann das Markierungsmittel M1 auch in einem hier nicht näher gezeigten Eingangsbereich oder außerhalb des Raums R angeordnet sein. Das zweite Markierungsmittel M2 ist vorliegend dem Gegenstand O zugeordnet und hierfür in geeigneter Weise an diesem befestigt. Exemplarisch sind beide Markierungsmittel M1, M2 jeweils als QR-Code ausgebildet oder umfassen zumindest einen solchen QR-Code. Ansonsten könnte wenigstens eines der Markierungsmittel M1, M2 alternativ oder ergänzend einen Strichcode besitzen. Mittels eines wenigstens eine Kamera besitzenden digitalen Endgeräts E ist es möglich, den optisch erfassbaren QR-Code oder Strichcode der Markierungsmittel M1, M2 zu lesen. Auf diese Weise kann beispielsweise wenigstens eine zuvor in der Datenbank P hinterlegte Information zu dem Raum R oder/und dem Gegenstand O aufgerufen und auf dem Endgerät E angezeigt werden. Hierzu kann ein entsprechendes Programm beziehungsweise eine App auf dem Endgerät E installiert sein, um eine automatisierte Zuordnung des jeweiligen Markierungsmittels M1, M2 mit der hierzu hinterlegten Information zu erhalten. Einer das Endgerät E bedienenden Person ist es durch Einlesen (Scannen) des jeweiligen Markierungsmittels M1, M2 möglich, beispielsweise eine Information über den Zeitpunkt der zuletzt durchgeführten thermischen Entwesung des Raums R oder/und des Gegenstands O zu erhalten. Alternativ oder ergänzend hierzu kann so auch eine Information aus der Datenbank P abgefragt werden, die beispielsweise Auskunft über die maximale Erhitzbarkeit des Gegenstands O oder/und des Raums gibt.

Grundsätzlich kann es sich bei dem Raum R um einen solchen handeln, welcher einer thermischen Entwesung unterzogen werden soll. Alternativ kann es sich bei dem Raum R um einen solchen handeln, welcher lediglich als abgeschlossener Bereich für die Entwesung des Gegenstands O dient, der hierfür, insbesondere zusammen mit mindestens einem weiteren nicht dargestellten Gegenstand, zuvor in den Raum R verbracht wurde. Rein beispielhaft soll das erfindungsgemäße thermische Entwesungsverfahren nachfolgend anhand des möglichen und in Fig. 1 angedeuteten Anwendungsfalls beschrieben werden, im dem der Raum R selbst und der wenigstens eine in diesem enthaltene oder angeordnete Gegenstand O einer thermischen Entwesung entzogen werden.

Erfindungsgemäß wird zunächst das erste Gerät G1 insofern aktiviert, als dass dieses mit dem Entzug von Feuchtigkeit aus der im Raum R befindlichen Raumluft L beginnt. Sofern es sich um wenigstens ein Kombi-Gerät handelt, wird hierfür zunächst seine entsprechende Entfeuchtungsfunktion aktiviert.

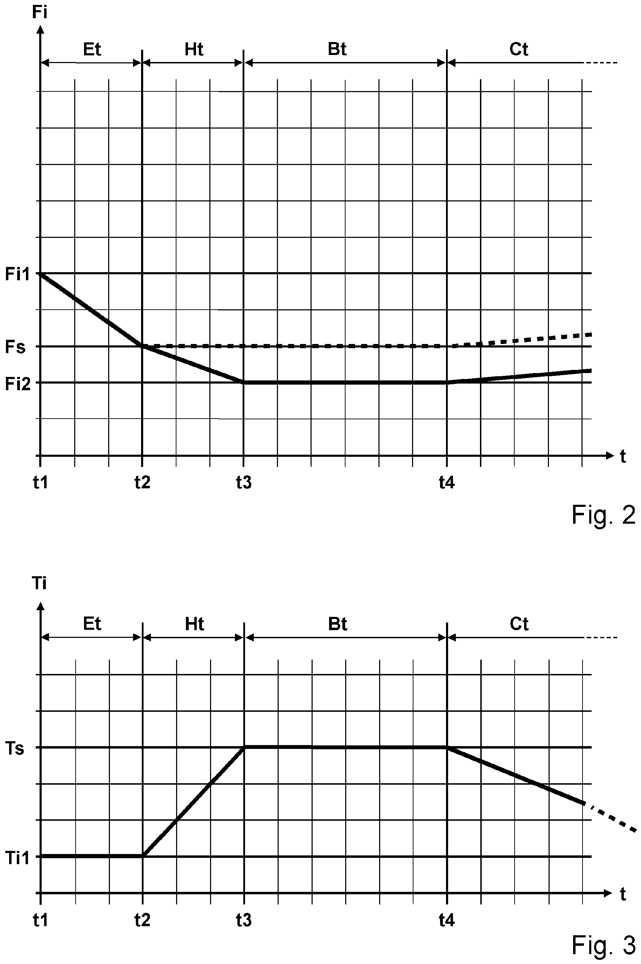

Fig. 2 ist ein Diagramm zu entnehmen, auf dessen Abszisse beziehungsweise (waagerechten) Abszissenachse die Zeit t aufgetragen ist, während dessen Ordinate beziehungsweise (senkrechte) Ordinatenachse die Ist-Luftfeuchtigkeit Fi der Raumluft L anzeigt. Bei der Ist-Luftfeuchtigkeit Fi kann es sich um die absolute Ist-Luftfeuchtigkeit Fi oder/und die relative Ist-Luftfeuchtigkeit Fi handeln. Die relative Ist-Luftfeuchtigkeit Fi wird in dem Diagramm mit einer durchgehenden dicken Linie dargestellt, während die hiervon abweichende absolute Ist-Luftfeuchtigkeit Fi mit einer unterbrochenen dicken Linie angedeutet ist.

Die gewählte Darstellung ist rein qualitativ zu verstehen, wobei die den Linien zugrundeliegenden Werte der jeweiligen Ist-Luftfeuchtigkeit Fi und/oder der Zeit t unterschiedlich sein können, obwohl diese im Diagramm beispielsweise zum Teil deckungsgleich verlaufen. Mit anderen Worten können die absolute und relative Ist-Luftfeuchtigkeit Fi beispielsweise zum Zeitpunk t2 voneinander unterschiedliche Werte aufweisen, obwohl deren zugehörigen Linien im Diagramm denselben Punkt schneiden.

Das erste Gerät G1 beziehungsweise die Entfeuchtungsfunktion wird zum Zeitpunkt t1 aktiviert. Zu diesem Zeitpunkt t1 weist die Ist-Luftfeuchtigkeit Fi den Wert Fi1 auf. Diese wird nun im weiteren Verlauf bis zu einer angestrebten Soll- Luftfeuchtigkeit Fs hin abgesenkt, wobei der jeweilige Wert der Ist-Luftfeuchtigkeit Fi durch einen der Sensoren D1, D2, insbesondere den ersten Sensor D1, erfasst und an eine hier nicht näher gezeigte Steuerung übermittelt wird. Besagte Steuerung kann beispielsweise in oder an einem der Geräte G1, G2, insbesondere dem ersten Gerät G1, angeordnet sein, um dessen Leistung oder/und Betriebszustand (aktiv/inaktiv) entsprechend zu manipulieren. Für den Fall, dass wenigstens einer der Sensoren D1, D2 zum Messung der Feuchte des Gegenstands O ausgebildet und angeordnet ist, sind die vorherigen sowie nachfolgenden Ausführungen zur Ist-Luftfeuchtigkeit Fi und Soll-Luftfeuchtigkeit Fs synonym zu der dann relevanten Ist-Feuchtigkeit und Soll-Feuchtigkeit des Gegenstands O anzusehen.

Fig. 3 ist ein weiteres Diagramm zu entnehmen, auf dessen Abszisse beziehungsweise (waagerechten) Abszissenachse ebenfalls die Zeit t aufgetragen ist, während dessen Ordinate beziehungsweise (senkrechte) Ordinatenachse die jeweilige Ist-Temperatur Ti der Raumluft L anzeigt. In Verbindung von Fig. 3 mit Fig. 2 ist zu erkennen, dass die Ist-Temperatur Ti zum Zeitpunkt t1 - also dem Zeitpunkt der Aktivierung des ersten Geräts G1, beziehungsweise der Entfeuchtungsfunktion, - den Wert Ti1 aufweist. Bis zum Zeitpunkt t2, an dem die Ist-Luftfeuchtigkeit Fi den Wert der angestrebten Soll- Luftfeuchtigkeit Fs der Raumluft L erreicht, verbleibt die Ist-Temperatur Ti unverändert beziehungsweise wird nicht aktiv verändert. Die Zeitspanne vom Zeitpunkt t1 zum Zeitpunkt t2 kann als, insbesondere aktive, Entfeuchtungszeit Et bezeichnet werden.

Erst nachdem die Ist-Luftfeuchtigkeit Fi zum Zeitpunkt t2 den Wert der angestrebten Soll-Luftfeuchtigkeit Fs erreicht hat, wird nun das zweite Gerät G2, beziehungsweise die Erhitzungsfunktion, aktiviert. In der Folge kommt es zu einem entsprechenden Anstieg in der Ist-Temperatur Ti der Raumluft L. Die Raumluft L wird nun über eine Heizzeit Ht hinweg so lange weiter erhitzt, bis diese zum Zeitpunkt t3 eine angestrebte Soll-Temperatur Ts erreicht hat. Beispielhaft erfolgt die Erhitzung vorliegend konstant, wie anhand des linearen Verlaufs der durchgehenden dicken Linie angedeutet. Alternativ kann die Ist-Temperatur Ti der Raumluft L in nicht näher gezeigter Weise stufenweise auf die zu erreichende Soll-Temperatur Ts erhöht werden. Der jeweilige Wert der Ist-Temperatur Ti wird durch einen der Sensoren D1, D2, insbesondere den zweiten Sensor D2, erfasst und an eine, beziehungsweise die, hier nicht näher gezeigte Steuerung übermittelt. Besagte Steuerung kann beispielsweise in oder an einem der Geräte G1, G2, insbesondere dem zweiten Gerät G2, angeordnet sein, um dessen Leistung oder/ und Betriebszustand (aktiv/inaktiv) entsprechend zu manipulieren. Für den Fall, dass wenigstens einer der Sensoren D1, D2 zum Messung der Temperatur des Gegenstands O ausgebildet und angeordnet ist, sind die vorherigen sowie nachfolgenden Ausführungen zur Ist-Temperatur Ti und Soll-Temperatur Ts synonym zu der dann relevanten Ist-Temperatur und Soll-Temperatur des Gegenstands O anzusehen.

Je nach Anwendungsfall kann das erste Gerät G1, beziehungsweise die Entfeuchtungsfunktion, während der Heizzeit Ht oder auch darüber hinaus aktiviert bleiben. Vorliegend wird das erste Gerät G1, beziehungsweise die Entfeuchtungsfunktion, rein beispielhaft zum Zeitpunkt t2 - also mit Ablauf der Entfeuchtungszeit Et - inaktiviert, also ausgeschaltet. Wie in Fig. 2 ersichtlich, verbleibt die absolute Ist-Luftfeuchtigkeit Fi (unterbrochene dicke Linie) daraufhin auf dem erreichten Wert der Soll-Luftfeuchtigkeit Fs, wobei der Wert der relativen Ist-Luftfeuchtigkeit Fi (durchgehende dicke Linie) während der Heizzeit Ht naturgemäß weiter abnimmt. Dies liegt darin begründet, dass der Anteil der in der Raumluft L tatsächlich vorhandenen Masse an Feuchte nach der Inaktivierung des ersten Geräts G1, beziehungsweise der Entfeuchtungsfunktion, ab dem Zeitpunkt t2 unverändert bleibt, wohingegen die Aufnahmefähigkeit für Feuchte mit zunehmender Temperatur der Raumluft L steigt, so dass deren relativer Wert innerhalb der Raumluft L entsprechend sinkt.

Nach Erreichen der Soll-Temperatur Ts der Raumluft L zum Zeitpunkt t3 beginnt eine Behandlungszeit Bt, in der die Ist-Temperatur Ts der Raumluft L auf dem Wert der angestrebten Soll-Temperatur Ts gehalten wird. Vor allem während dieser Behandlungszeit Bt finden die gewünschten Prozesse in Bezug auf die zu eliminierenden Schädlinge statt. Dies verlangt in der Regel den weiteren Betrieb des zweiten Geräts G2, beziehungsweise der Erhitzungsfunktion, während der Behandlungszeit Bt, um einer dem Prozess entgegenstehenden Abkühlung der Raumluft L unterhalb der Soll-Temperatur Ts gezielt entgegenzuwirken.

Alternativ zum hier näher erläuterten beispielhaften Ablauf des erfindungsgemäßen Entwesungsverfahrens kann die aktive Erhitzung der Raumluft L grundsätzlich auch gleichzeitig mit deren aktiven Entfeuchtung zum Zeitpunkt t1 oder noch während der Entfeuchtungszeit Et zwischen Zeitpunkt t1 und Zeitpunkt t2 beginnen.

Mit Ablauf der Behandlungszeit Bt zum Zeitpunkt t4 ist der in Bezug auf die Entwesung notwendige Prozess abgeschlossen, so dass das zweite Gerät G2, beziehungsweise die Erhitzungsfunktion, ausgeschaltet und insofern inaktiviert werden kann. In der Folge sinkt die Ist-Temperatur Ti der Raumluft L ab dem Zeitpunkt t4 wieder ab (siehe Fig. 3). Gleichzeitig steigt die relative Ist-Luftfeuchtigkeit Fi aufgrund der Abkühlung der Raumluft L während einer Abkühlzeit Ct naturgemäß wieder an, während die absolute Ist-Luftfeuchtigkeit Fi ohne den Austausch der Raumluft L mit der Umgebungsluft auf dem erreichten Niveau verbleiben würde (nicht dargestellt) und bei einem Austausch mit der Umgebungsluft ebenfalls wieder ansteigen kann (siehe Fig. 2).

Die Datenbank P kann vor oder/und während oder/und nach Durchführung des Entwesungsverfahrens dafür genutzt werden, um Informationen aus dieser zu entnehmen und/oder in dieser abzulegen. Bevorzugt kann das, insbesondere stationäre oder mobile, digitale Endgerät E dazu eingerichtet sein, um den Zeitpunkt der fälligen Entwesung taggenau und/oder mit einem zeitlichen Vorlauf, insbesondere optisch und/oder akustisch, zu signalisieren. Besagter Zeitpunkt ist in vorteilhafter Weise als entsprechende Information in der Datenbank P abgelegt.

Bei dem auf dem Endgerät E installierten oder installierbaren Programm beziehungsweise der App kann es sich in vorteilhafter Weise um eine Cloud Applikation handeln. Diese kann ein integriertes Dashboard und/oder wenigstens eine Analysemöglichkeit aufweisen. Über die Cloud C könnten so sämtliche zur Entwesung vorgesehenen Behandlungsgüter (Gegenstände O) sowie einzelne Räume R und sogar verschiedene Standorte erfasst und verwaltet werden. In Kombination mit wenigstens einem Markierungsmittel M1, M2 und dessen Nutzung zur Kennzeichnung und/oder Verfolgung sowie dem Programm beziehungsweise der App steht so eine umfassende Hygienemanagement Lösung zur Verfügung, mit dem der Status des jeweiligen Hygienekonzepts problemlos zu jeder Zeit und von jedem Ort aus kontrollier- und/oder dokumentierbar ist. Durch Hinterlegung eines Hygienekonzepts in der Datenbank P kann die mit dessen Umsetzung betraute Person beispielsweise über das digitale Endgerät E über in Bezug auf einen bestimmten Raum R oder/und einen bestimmten Gegenstand O anstehende Entwesung informiert werden. Vor Ort wird durch Einlesen des wenigstens einen Markierungsmittels M1, M2 eine klare Verknüpfung zu dem jeweils zugeordneten Raum R und/oder Gegenstand O hergestellt, um beispielsweise hierfür notwendige Informationen aus der Datenbank P abzurufen und/oder den Zeitpunkt des Beginns oder/ und des Endes der durchzuführenden Entwesung als Information in der Datenbank P abzulegen. In vorteilhafter Weise verfügt jeder einzelne zu behandelnde Raum R und/oder jeder einzelne zu behandelnde Gegenstand O über ein eigenes Markierungsmittel M1, M2, um diese einzeln innerhalb der Datenbank P erfassen und in Bezug auf die durchgeführte/n beziehungsweise anstehende Entwesung selbiger individuell verwalten zu können.

Durch beispielsweise selbst festlegbare Intervalle kann nach dessen Ablauf eine Erinnerung an die demnächst anstehende Entwesung erfolgen, insbesondere über das digitale Endgerät E. Das System S selbst ermöglicht eine vollautomatische Durchführung des Entwesungsprozesses, indem Ist-Luftfeuchtigkeit Fi und Ist-Temperatur der Raumluft durch die Sensoren D1, D2 erfasst und an eine Steuerung übermittelt werden, woraufhin dann die entsprechende Ansteuerung der Geräte G1, G2 oder des wenigstens einen Kombi-Geräts erfolgen kann.

### Bezugszeichenliste:

- Bt -: Behandlungszeit
- C -: Cloud
- Ct -: Abkühlzeit
- D1 -: erster Sensor
- D2 -: zweiter Sensor
- E -: digitales Endgerät
- Fi -: Ist-Luftfeuchtigkeit
- Fi1 -: Ist-Luftfeuchtigkeit zum Zeitpunkt t1
- Fi2 -: Ist-Luftfeuchtigkeit zum Zeitpunkt t3
- Fs -: Soll-Luftfeuchtigkeit
- G1 -: erstes Gerät
- G2 -: zweites Gerät
- Ht -: Heizzeit
- L -: Raumluft
- M1 -: erstes Markierungsmittel
- M2 -: zweites Markierungsmittel
- O -: Gegenstand
- P -: Datenbank
- R -: Raum
- S -: System
- t -: Zeit
- t1 -: erster Zeitpunkt
- t2 -: zweiter Zeitpunkt
- t3 -: dritter Zeitpunkt
- t4 -: vierter Zeitpunkt
- Ti -: Temperatur
- Ti1 -: Wert von Ti zum Zeitpunkt t1
- Ts -: Soll-Temperatur

## Patentansprüche

1. Verfahren zur thermischen Entwesung eines Raums (R) und/ oder mindestens eines in einem Raum (R) befindlichen Gegenstands (O), wobei im Raum (R) vorhandene Raumluft (L) zumindest bereichsweise für die Dauer einer Behandlungszeit (Bt) von ihrer jeweiligen Ist Temperatur (Ti) auf eine Soll Temperatur (Ts) erhitzt wird,
**dadurch gekennzeichnet,**
**dass** der Raumluft (L) vor und/oder während ihrer Erhitzung, insbesondere in Abhängigkeit ihrer jeweiligen Ist-Temperatur (Ti), wenigstens bereichsweise ein Anteil ihrer jeweiligen Feuchtigkeit entzogen wird.

2. Verfahren nach Anspruch 1,
**dadurch gekennzeichnet,**
**dass** der Raumluft (L) so lange Feuchtigkeit entzogen wird, bis deren, insbesondere relative oder/und absolute, Ist Luftfeuchtigkeit (Fi) wenigstens bereichsweise auf eine, insbesondere relative oder/und absolute, Soll Luftfeuchtigkeit (Fs) hin abgesenkt ist.

3. Verfahren nach Anspruch 2,
**dadurch gekennzeichnet,**
**dass** erst beim Erreichen der, insbesondere relativen oder/und absoluten, Soll-Luftfeuchtigkeit (Fs) die Raumluft (L) auf ihre Soll-Temperatur (Ts) erhitzt wird.

4. Verfahren nach einem der vorhergehenden Ansprüche,
**dadurch gekennzeichnet,**
**dass** die Soll-Temperatur (Ts), insbesondere in Abhängigkeit der Art und/oder Anzahl von in dem Raum befindlichen Gegenständen, von 40°C bis 70°C oder von 45°C bis 65°C, bevorzugt von 50°C bis 60°C, beträgt.

5. Verfahren nach einem der vorhergehenden Ansprüche,
**dadurch gekennzeichnet,**
**dass** die Behandlungszeit (Bt), insbesondere in Abhängigkeit der Art und/oder Anzahl von in dem Raum befindlichen Gegenständen, von 30 Minuten bis 180 Minuten oder von 45 Minuten bis 150 Minuten, bevorzugt von 60 Minuten bis 120 Minute beträgt.

6. Verfahren nach Anspruch 2 bis 5,
**dadurch gekennzeichnet,**
**dass** die angestrebte absolute Soll- Luftfeuchtigkeit (Fs) der Raumluft (L), insbesondere in Abhängigkeit der Art und/oder Anzahl von im Raum befindlichen Gegenständen, von 2,0 g/m³ bis kleiner 6,9 g/m³, insbesondere von 2,0 g/m³ bis 6,0 g/m³, bevorzugt von 3,0 g/m³ bis 5,0 g/m³, beträgt.

7. Verfahren nach einem der vorhergehenden Ansprüche,
**dadurch gekennzeichnet,**
**dass** die angestrebte relative Soll-Luftfeuchtigkeit (Fs) der Raumluft (L), insbesondere in Abhängigkeit der Art und/oder Anzahl von in dem Raum (R) befindlichen Gegenständen, von 5% bis kleiner 40% oder von 5% bis 30%, bevorzugt von 10% bis 20%, beträgt.

8. Verfahren nach einem der vorhergehenden Ansprüche,
**dadurch gekennzeichnet,**
**dass** wenigstens für die Dauer der Manipulation der jeweiligen Ist-Temperatur (Ti) der Raumluft (L) ein zur wenigstens bereichsweisen Erhitzung der Raumluft (L), insbesondere auch zum Entzug von Feuchtigkeit aus der Raumluft (L), ausgebildetes, bevorzugt mobiles, Gerät (G1, G2) innerhalb des Raums (R) angeordnet wird oder ist.

9. Verfahren nach einem der vorhergehenden Ansprüche,
**dadurch gekennzeichnet,**
**dass** wenigstens für die Dauer der Manipulation der Feuchtigkeit der Raumluft (L) ein zum wenigstens bereichsweisen Entzug von Feuchtigkeit aus der Raumluft (L), insbesondere auch zur Erhitzung der Raumluft (L), ausgebildetes, bevorzugt mobiles, Gerät (G1, G2) innerhalb des Raums (R) angeordnet wird oder ist.

10. Verfahren nach Anspruch 8 oder 9,
**dadurch gekennzeichnet,**
**dass** nach Ablauf der Behandlungszeit (Bt) das, bevorzugt mobile, Gerät (G1, G2) ausgeschaltet wird.

11. Verfahren nach einem der vorhergehenden Ansprüche,
**dadurch gekennzeichnet,**
**dass** die jeweilige Ist-Temperatur (Ti) der Raumluft (L) durch wenigstens einen im Raum (R) angeordneten Sensor (D1, D2) erfasst wird.

12. Verfahren nach einem der vorhergehenden Ansprüche,
**dadurch gekennzeichnet,**
**dass** die jeweilige Ist-Temperatur (Ti) der Raumluft (L) stufenweise auf die zu erreichende Soll-Temperatur (Ts) erhöht wird.

13. Gerät (G1, G2), insbesondere in mobiler Ausgestaltung, zur Durchführung des Verfahrens nach einem der vorher-gehenden Ansprüche.

14. System (S) zur Durchführung des Verfahrens nach einem der Ansprüche 1 bis 12, umfassend ein zum Entzug von Feuchtigkeit aus Raumluft (L) und/oder zur Erhitzung von Raumluft (L) ausgebildetes, bevorzugt mobiles, Gerät (G1, G2), insbesondere nach Anspruch 13, sowie wenigstens eine, vorzugsweise als Teil einer Cloud (C) arbeitende, Datenbank (D).

15. System (S) nach Anspruch 14,
**gekennzeichnet durch**
mindestens einen Sensor (D1, D2) und/oder wenigstens ein Markierungsmittel (M1, M2).

16. Verfahren zum Betrieb des Systems (S) nach Anspruch 14 oder 15 zur temporären Entwesung eines Raums (R) und/oder mindestens eines in einem Raum (R) befindlichen Gegenstands (O), wobei wenigstens eine Information zum Raum (R) und/oder dem Gegenstand (O) in einer Datenbank (D) abgelegt ist oder/und abgelegt wird und anhand eines in oder an dem Raum (R) und/oder dem Gegenstand (O) angeordneten oder anordenbaren Markierungsmittels (M1, M2) aus der Datenbank (D) abgerufen wird oder abrufbar ist.

17. Verfahren nach Anspruch 16,
**dadurch gekennzeichnet,**
**dass** die innerhalb der Datenbank (D) abgelegte oder ablegbare Information wenigstens einen der nachfolgend aufgeführten Inhalte aufweist:
- Zeitpunkt/e der, insbesondere zuletzt, durchgeführten Entwesung/en,
- Zeitpunkt/e der, insbesondere demnächst, fälligen Entwesung/en,
- Höhe der zur thermischen Behandlung erforderlichen Soll-Temperatur (Ts) der Raumluft (L),
- Höhe/n der zur thermischen Behandlung, insbesondere zuletzt, erreichten Temperatur/en der Raumluft (L),
- zeitliche/r Verläufe/Verlauf der zur thermischen Behandlung, insbesondere zuletzt, erreichten Temperaturen der Raumluft (L) während der Behandlungszeit/en (Bt),
- Länge der zur thermischen Behandlung erforderlichen Behandlungszeit (Bt),
- Länge der zur thermischen Behandlung, insbesondere zuletzt, abgelaufenen Behandlungszeit/en (Bt),
- Höhe der vor oder/und während der thermischen Behandlung erforderlichen absoluten Soll- Luftfeuchtigkeit/en (Fs) der Raumluft (L),
- Höhe der vor oder/und während der thermischen Behandlung, insbesondere zuletzt, erreichten absoluten Ist-Luftfeuchtigkeit/en (Fi) der Raumluft (L),
- Höhe der vor oder/und während der thermischen Behandlung erforderlichen relativen Soll-Luftfeuchtigkeit/en (Fs) der Raumluft (L),
- Höhe der vor oder/und während der thermischen Behandlung, insbesondere zuletzt, erreichten relativen Ist-Luftfeuchtigkeit/en (Fi) der Raumluft (L),
- zeitlicher Verlauf der vor oder/und während der thermischen Behandlung erreichten absoluten Ist- Luftfeuchtigkeit/en (Fi) der Raumluft (L),
- zeitlicher Verlauf der vor oder/und während der thermischen Behandlung erreichten relativen Ist- Luftfeuchtigkeit/en (Fi) der Raumluft (L),
- Größe und/oder Abmessungen des Raums (R),
- Grundriß des Raums (R),
- Art des Gegenstands (O),
- maximal zulässige Temperatur (T) des Gegenstands (O),
- Hinweis/e zur Vorbereitung des Raums (R) im Vorfeld des Entwesungsprozesses,
- Hinweis/e zur Vorbereitung des Gegenstands (O) im Vorfeld des Entwesungsprozesses.

18. Verfahren nach Anspruch 16 oder 17,
**dadurch gekennzeichnet,**
**dass** das Markierungsmittel (M1, M2) ein QR-Code ist oder einen solchen umfasst.

19. Verfahren nach einem der Ansprüche 16 bis 18,
**dadurch gekennzeichnet,**
**dass** sich die Datenbank (D) innerhalb einer Cloud (C) befindet.

20. Verfahren nach einem der Ansprüche 16 bis 19,
**dadurch gekennzeichnet,**
**dass** der Zeitpunkt der fälligen Entwesung als in der Datenbank (D) abgelegte Information taggenau und/oder mit einem zeitlichen Vorlauf mittels eines mobilen und/oder stationären digitalen Endgeräts (E), insbesondere optisch und/oder akustisch, signalisiert wird.

21. Verfahren nach einem der Ansprüche 16 bis 20,
**dadurch gekennzeichnet,**
**dass** der Zeitpunkt der zuletzt durchgeführten Entwesung eines Raums (R) oder/und eines Gegenstands (O) als Information in der Datenbank (D) abgelegt wird, wobei die Zuordnung des Zeitpunkts zu dem Raum (R) oder/und dem Gegenstand (O) durch, insbesondere vorheriges oder/und paralleles oder/und nachträgliches, Auslesen des Markierungsmittels (M1, M2) des Raums (R) oder/und des Gegenstands (O) mit einem, bevorzugt mobilen, digitalen Endgerät (E) erfolgt.

22. Verfahren nach einem der Ansprüche 16 bis 21,
**dadurch gekennzeichnet,**
**dass** wenigstens eine der nachfolgend genannten Informationen über mindestens einen Sensor (D1, D2) erfasst und kabelgebunden oder kabellos an ein zur Manipulation der jeweiligen Ist Temperatur (Ti) der Raumluft (L) und/oder dem Entzug von Feuchtigkeit aus der Raumluft (L) ausgebildetes, bevorzugt mobiles, Gerät (G1, G2) und/oder die Datenbank (D) und/oder eine Steuerung übermittelt wird:
- Wert/e der während der thermischen Behandlung erreichten Ist-Temperatur/en (Ti) der Raumluft (L),
- zeitlicher Verlauf der während der thermischen Behandlung erreichten Ist-Temperatur/en (Ti) der Raumluft (L) während der Behandlungszeit/en (Bt),
- Länge der während der thermischen Behandlung abgelaufenen Behandlungszeit (Bt),
- Höhe der vor der thermischen Behandlung vorhandenen absoluten Ist-Luftfeuchtigkeit (Fi) der Raumluft (L),
- Höhe der während der thermischen Behandlung erreichten absoluten Ist Luftfeuchtigkeit/en (Fi) der Raumluft (L),
- Höhe der vor der thermischen Behandlung vorhandenen relativen Ist-Luftfeuchtigkeit (Fi) der Raumluft (L),
- Höhe der während der thermischen Behandlung erreichten relativen Ist-Luftfeuchtigkeit/en (Fi) der Raumluft (L),
- zeitlicher Verlauf der vor oder/und während der thermischen Behandlung erreichten absoluten Ist- Luftfeuchtigkeit/en (Fi) der Raumluft (L),
- zeitlicher Verlauf der vor oder/und während der thermischen Behandlung erreichten relativen Ist- Luftfeuchtigkeit/en (Fi) der Raumluft (L).
